# EUROPEAN PATENT SPECIFICATION

(11) **EP 1 157 979 B1**
(45) Date of publication and mention of the grant of the patent: **15.12.2004**
(21) Application number: 01111839.5
(22) Date of filing: 16.05.2001
(51) Int. Cl.: C04B 35/83, C04B 41/87

(54) **Composite material impregnated with metal silicide and process for producing the same**
Mit Metallsilizid imprägniertes Verbundmaterial und Verfahren zu dessen Herstellung
Matériau composé imprégné avec un silicide métallique et procédé de fabrication

(30) Priority: 19.05.2000 JP 2000148152
(43) Date of publication of application: 28.11.2001
(73) Proprietor: NGK INSULATORS, LTD., Nagoya-City, Aichi Prefecture 467-8530 (JP)
(72) Inventor: Hanzawa, Shigeru, c/o NGK Insulators, Ltd., Nagoya-city, Aichi-prefecture, 467-8530 (JP); Hashimoto, Naoki, c/o NGK Insulators, Ltd., Nagoya-city, Aichi-prefecture, 467-8530 (JP)
(74) Representative: Leson, Thomas Johannes Alois, Dipl.-Ing.

(56) References cited:
- US-A- 5 677 060
- US-A- 6 107 225

## Description

### Background of the Invention and Related Art Statement

The present invention relates to composite materials impregnated with a metal silicide, which have a surface layer having a superior oxidation resistance at elevated temperatures and also superior properties in mechanical strength, and processes for producing the same.

While technological innovation progresses rapidly, a need continues to exist for providing lightweight device made of composite materials having good mechanical strengths and oxidation-resistance in high-technology areas inclusive of for aerospace applications requiring characteristics such as resistance to heat, corrosion, oxidation, and abrasion and the like.

In these areas, although devices made of composite materials of various kinds of ceramics and metals and others have been utilized in the past, it is the present state that devices made of composite materials having lightweight properties and well balanced oxidation resistance, anti-abrasion, and thermal stability have not been provided yet. In U.S. 6,107,225 an optionally carbon-fiber reinforced SiC-infiltrated composite material is disclosed. Said composite material is obtained by infiltrating molten carbon-silicide of Mo having an approximate formula of Mo₃Si₂C into a silicon-carbide-based preform.

### Summary of the Invention

The present invention has been made in light of the above-described problems in the prior art. An object of the present invention is to provide a composite material, which retains mechanical strength at a given level and, at the same time, possesses a good balance in terms of lightweight properties and resistance to oxidation, abrasion, and heat, and a process for producing the same.

The inventors have carried out extensive investigations in light of the present state as described above, and in consequence obtained the finding that the above-described object is achieved by a composite material that can be produced especially by impregnating a particular metal silicide into a C/C composite or a carbonaceous composite material utilizing the C/C composite as a starting material, leading to the present invention.

According to the first aspect of the present invention, therefore, there are provided a composite material impregnated with a metal silicide characterized by comprising a metal silicide and a C/C composite impregnated with at least the metal silicide; the composite material characterized in that the metal silicide has a melting point of at least 1400°C or higher; the composite material characterized in that the metal silicide is at least one selected from the group consisting of titanium silicide, zirconium silicide, tantalum silicide, niobium silicide, chromium silicide, tungsten silicide, and molybdenum silicide; the composite material characterized in that the C/C composite is tubular, cylindrical, perforated-disc-shaped, or angular; and the composite material characterized in that the C/C composite is composed of carbon and carbon fiber and has a porosity of 5% to 50% before impregnating the metal silicide.

According to another aspect of the present invention, there are provided a process for producing a composite material comprising a metal silicide and a C/C composite impregnated with at least the metal silicide, characterized by holding a basal material and a metal silicide in an inert atmosphere at a temperature in the vicinity of the melting point of the metal silicide for a desired period of time to impregnate the C/C composite with the metal silicide, wherein the basal material is selected from C/C composites and carbonaceous composite materials utilizing C/C composites as a starting material; the process for producing a composite material, characterized in that the metal silicide has a melting point of at least 1400°C or higher; the process for producing a composite material, characterized in that the metal silicide is at least one selected from the group consisting of titanium silicide, zirconium silicide, tantalum silicide, niobium silicide, chromium silicide, tungsten silicide, and molybdenum silicide; and the process for producing a composite material, characterized in that the metal silicide is impregnated at an amount in the range of 1% to 50% by weight.

### Brief Description of the Drawings

Fig. 1 is a schematic perspective view showing a structure of a yarn assembly constituting a basic structure of a C/C composite for use in producing composite materials of the present invention.
Fig. 2(a) is a sectional view of a Si-SiC-based composite material taken along line IIa-IIa of Fig. 1. Fig. 2(b) is a sectional view of the same material taken along line IIb-IIb of Fig. 1.
Fig. 3(a) is a sectional view of a SiC-based composite material taken along line IIa-IIa of Fig. 1. Fig. 3(b) is a sectional view of the same material taken along line IIb-IIb of Fig. 1.
Fig. 4 is EDS photographs showing the sectional structure of a composite material impregnated with tungsten disilicide, according to the present invention, indicating a state of impregnation of (a) metallic silicon and (b) metallic tungsten.

### Detailed Description of Preferred Embodiment

In producing a composite material impregnated with a metal silicide according to the present invention, characterized by comprising a metal silicide and a C/C composite impregnated with at least the metal silicide, as a basal material, a C/C composite composed mainly of amorphous carbon and carbon fibers or a carbonaceous composite material utilizing a C/C composite as a staring material, *i.e.,* a Si-SiC- or Si-based composite material that is a composite material having as a basal material a C/C composite in which layers made up of silicon carbide are formed by impregnating the C/C composite with metallic silicon to react at least a portion of the metallic silicide with carbon are suitably used.

As used herein, a C/C composite is a shaped article or a burned article obtained by burning the shaped article which is obtained by preparing carbon fiber bundles by including pitch, coke, or the like capable of forming free carbon on the carbon fiber bundles after burning and that is a powder binder serving as matrix for the carbon fiber bundles, and optionally incorporating phenolic resin powder or the like, forming a flexible coating of plastics such as thermoplastic resins around these carbon fiber bundles to produce preformed yarns as a flexible intermediate, forming these preformed yarns into sheet-shaped or woven-cloth-like articles by means of the method described in Japanese Patent Application Laid-open No. 2-80639, and laminating them at a desired amount, followed by hot pressing.

Additionally, even for such a commonly existing C/C composite having carbon fibers and carbon as the major components, a C/C composite is also included which can be produced by methods repeating infiltration of tar or pitch into carbon fibers and burning or by methods allowing processes such as CVI and CVD to afford carbon to carbon fibers. Carbon fibers are, for example, long, short, and chopped fibers, and are not specified to a particular type or brand.

In other words, a C/C composite in the context of the present invention is referred to a composite material composed of carbon fibers and carbon other than carbon fiber and having a structure in which the carbon fibers constitute a laminated structure consisting of a particular number of carbon fiber bundles and the carbon other than carbon fiber forms a matrix to fill voids between the laminated structures, *i.e.,* characterized by having a structure of a particular laminated structure and a matrix.

Furthermore, the C/C composites are not limited to a particular configuration, as long as carbon fibers and carbon are the major component materials.

In this specification, the term "a C/C composite impregnated with at least a metal silicide" means any material in which a C/C composite, a basal material, is impregnated with a metal silicide, and a resulting product produced by impregnating any material in which a Si-SiC- or Si-based composite material described in detail below with a metal silicide. That is, the expression "impregnated with at least metal silicide" means a state where metallic silicon and silicon carbide (Si-SiC) or silicon carbide (SiC) is impregnated in addition to the one where a desired amount of metal silicide is impregnated.

For a C/C composite that is one of the materials to be used as a basal material, articles can be used which are obtained by gathering, in general, hundreds to dqzens of thousands of carbon fibers having a diameter of about 10 µm to form fiber bundles (yarns), obtaining flexible filamentous intermediates prepared by coating the yarns with a thermoplastic resin, forming them into sheet-shaped articles by the method described in Japanese Patent Application Laid-open No. 2-80639, producing unidirectional sheets (UD sheets) and various types of cloths by arranging the sheet-shaped articles two- or three-dimensionally, or making pre-formed articles of a pre-determined shape (fiber pre-forms), for example, by laminating the above-mentioned sheets and cloths, and burning coatings such as thermoplastic resins of organic substances formed on the outer surface of the fiber bundles of the pre-formed articles to carbonize and remove the coatings. For C/C composites for use in the present invention, the carbon component other than carbon fiber in the above-mentioned yarns is preferably carbon powder, and particularly preferably graphitized carbon powder.

A Si-SiC-based composite material, which is one type of the carbonaceous composite materials utilizing as a starting material a C/C composite used as a basal material in the present invention or which is one type of composite material in which a C/C composite is impregnated with metallic silicon and at least a portion of the metallic silicon is reacted with carbon to form layers of silicon carbide, is referred to a composite material composed of 55% to 75% by weight of carbon, 1% to 10% by weight of silicon, and 10% to 50% by weight of silicon carbide, provided with a yarn assembly integrated in such a way that yarns containing at least bundles of carbon fibers and a carbon component other than carbon fiber are ordered in the yarn direction and additionally combined three-dimensionally to prevent from detaching them to each other and a matrix of Si-SiC-based material with which voids between the neighboring yarns within the yarn assembly are filled, and having a coefficient of kinetic friction of 0.05 to 0.6 and a controlled porosity of 0.5% to 10%. Such a material can be produced by the method disclosed in WO99/19273 published as an international publication on April 22, 1999.

In this case, it is meant that a Si-SiC-based material typically comprises a silicon phase and silicon carbide phases, including several different phases varying from a silicon phase of silicon remaining at an unreacted state to a phase of almost pure silicon carbide, and the silicon carbide phases can include SiC co-existing phases having a gradient change in the content of silicon. Therefore, a Si-SiC-based material is collectively referred to materials containing a carbon concentration within the range of 0 to 50 mol% in the Si-SiC series. For a Si-SiC-based composite material relating to the present invention, it is understood that the matrix region is formed of the Si-SiC-based material.

In addition, these Si-SiC-based composite materials preferably have a matrix with a gradient composition with the percent content of silicon increasing as the distance from the yarn surface is increased. In these Si-SiC-based composite materials, preferably the yarn assembly made up of carbon fibers is composed of a plurality of yarn alignments . Each yarn alignment is formed by arranging yarns almost in parallel and two-dimensionally, the yarns made up by gathering a particular number of carbon fibers, and the yarn alignments are laminated to make up the yarn assembly. This allows Si-SiC-based composite materials to possess a laminated structure in which a plurality of layers of the yarn alignments are laminated in a specific direction.

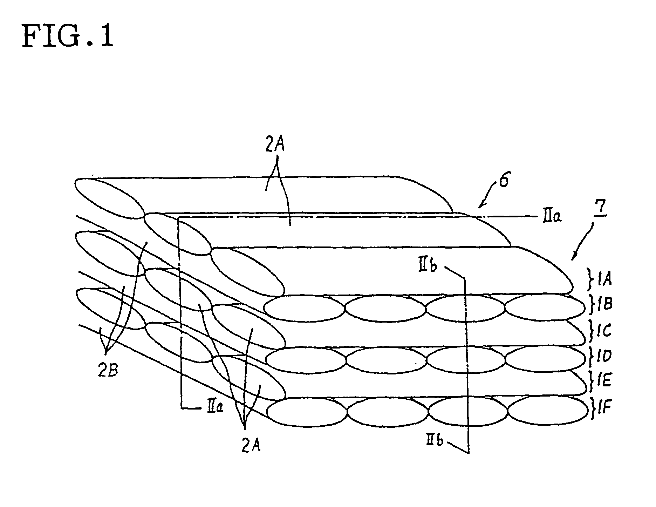

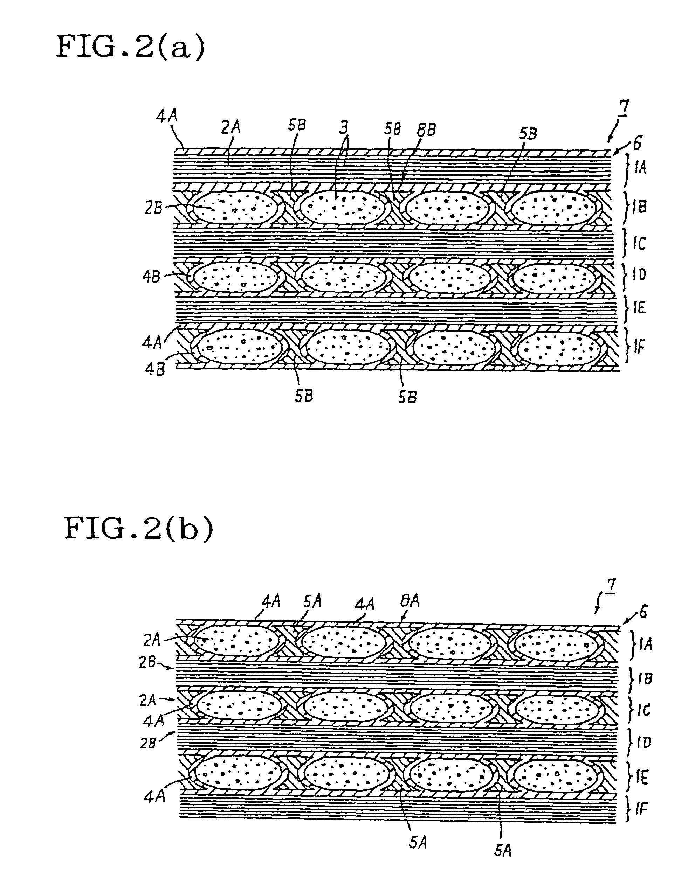

Figure 1 is a schematic perspective view illustrating the concept of the yarn assembly. Figure 2(a) is a sectional view taken along line IIa-IIa of Figure 1. Figure 2(b) is a sectional view taken along line IIb-IIb of Figure 1. Yarn assembly 6 constitutes the backbone of Si-SiC-based composite material 7. Yarn assembly 6 comprises laminating yarn alignments 1A, 1B, 1C, 1D, 1E, 1F in the vertical direction. In each yarn alignment, each yarn 3 is arranged two-dimensionally, and is almost parallel in its longitudinal direction. Each yarn alignment neighboring in the vertical direction crosses at right angles in the longitudinal direction of each yarn. That is, each yarn 2A in each of yarn alignments 1A, 1C, 1E is parallel to each other in the longitudinal direction, and crosses at right angles to each yarn 2B in each of yarn alignments 1B, 1D, 1F in the longitudinal direction of yarn 2B. Each yarn is made up by fiber bundles 3 composed of carbon fibers and a carbon component other than carbon fiber. The laminating of the yarn alignments results in constituting the yarn assembly 6 in the form of a three-dimensional grid. Each yarn is pressed during the molding step under pressure and formed to an oval-like figure.

In each of yarn alignments 1A, 1C, 1E, the spaces between the neighboring yarns are filled with matrix 8A, each matrix 8A extending parallel to yarn 2A along its surface. In each of yarn alignments 1B, 1D, 1F, the spaces between the neighboring yarns are filled with matrix 8B, each matrix 8B extending parallel to yarn 2B along its surface.

In this example, matrices 8A and 8B are composed of silicon carbide phases 4A and 4B coating the surface of each yarn, and Si-SiC-based material phases 5A and 5B having a smaller content of carbon than that of silicon carbide phases 4A and 4B, respectively. Silicon can be contained also in the silicon carbide phases to a small degree. Furthermore, in this example, there are formed silicon carbide phases 4A and 4B between vertically neighboring yarns 2A and 2B as well. Each of matrices 8A and 8B extends narrowly and longitudinally along the surface of each yarn, preferably linearly, and crosses mutually at right angles. Matrix 8A within yarn alignments 1A, 1C, 1E and matrix 8B within yarn alignments 1B, 1D, 1F crossing at right angles to them are connected at the voids between yarns 2A and 2B, respectively. Consequently, matrices 8A and 8B form a three-dimensional grid as a whole.

A SiC-based composite material that is a second material of the carbonaceous composite materials utilizing as starting material a C/C composite used as a basal material in the present invention and that is a composite material in which layers made up of silicon carbide are formed by impregnating a C/C composite with metallic silicon to react at least a portion of the metallic silicon with carbon is referred to a composite material of Si-SiC composites composed of silicon carbide, carbon fibers, and a carbon components other than carbon fiber and having a structure comprising the backbone region and matrix formed around the backbone region, wherein at least 50% of the silicon carbide is β-type, wherein the backbone region is formed of the carbon fibers and carbon component other than carbon fiber and the silicon carbide can be present in a portion of the backbone region, wherein the matrix is formed of the silicon carbide, and the matrix and the backbone region are formed integrally, and wherein the composite material has a porosity of 0.5% to 5% and a two-peaked distribution of the average pore size.

Accordingly, these SiC-base composite materials utilize as the backbone region a C/C composite in which each of carbon fibers is composed of carbon fiber bundles, and thus have a significant feature of almost retaining mechanical strength which the raw material C/C composite possesses or increasing it by the formation of silicon carbide, since even if SiC is formed on their portion, each of carbon fibers retains the structure as carbon fiber without breaking so that carbon fibers do not break into shorter fibers due to formation of silicon carbide. In addition, there is a combined structure in which a matrix made up of SiC-based material is formed between the neighboring yarns in the yarn assembly. In this point, these materials are different from the above-mentioned Si-SiC-based composite materials. These materials can be produced by the method disclosed in Japanese Patent Application No. 11-31979, filed on February 9, 1999. These materials also have a coefficient of kinetic friction in the range of 0.05 to 0.6.

In the present invention, a SiC-based material is referred to material containing silicon carbides having different degrees of binding with carbon. Such a SiC-based material can be produced as described below. According to the present invention, a C/C composite is impregnated with metallic silicon. During that time, the metallic silicon reacts with carbon atoms making up the carbon fibers within the composite and/or free carbon atoms remaining on the surface of the carbon fibers and its portion undergoes carbonization, so that partially carbonized silicon is formed on the outermost surface of the C/C composite and between the yarns made up of the carbon fibers, and thus resulting in the formation of matrix made up of silicon carbide between the above-mentioned yarns.

The matrix can contain several, different phases ranging from a silicon-carbide-like phase resulting from combining an extremely small amount of silicon and carbon to a crystal phase of pure silicon carbide. However, the matrix contains only metallic silicon not more than a detection limit by X-ray (0.3% by weight). That is, the matrix typically comprises the silicon carbide phase, and the silicon carbide phase can contain SiC-like phases having a gradual change in the content of silicon. Therefore, a SiC-based material is collectively referred to materials containing a carbon concentration within the range of not less than at least 0.01 to 50 mol% in the SiC series. It is not practical to control the carbon concentration to less than 0.01 mol%, because a precise calculation is required for the amount of metallic silicon to be added in relation with the amount of free carbon in the C/C composite and the temperature management becomes complicated in the final step described below. Theoretically, however, it is possible to control the carbon concentration down to about 0.001 mol%.

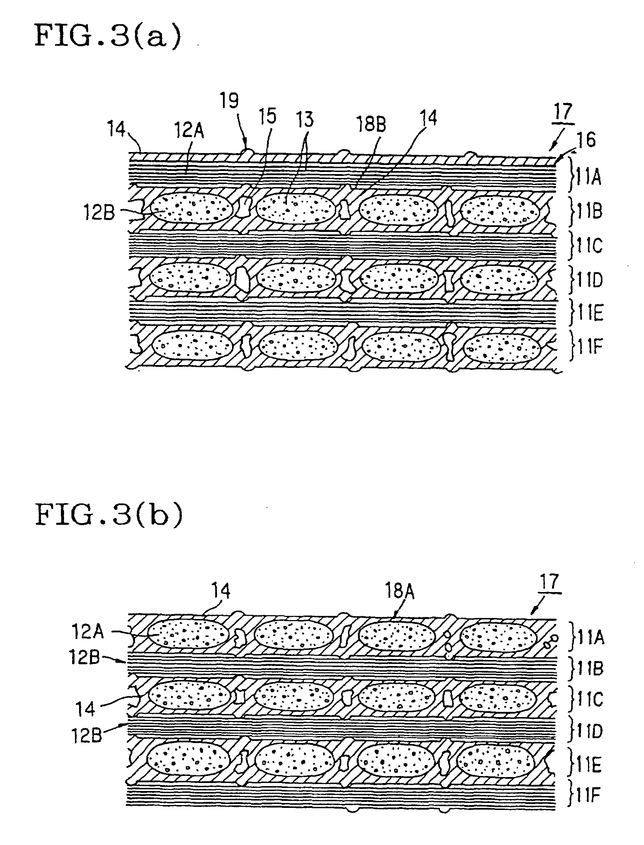

The SiC-based composite material will be further explained using the drawings. In principle, the SiC-based composite material also has the same backbone region as shown in figure 1. Figure 3(a) shows a sectional view of a SiC-based composite material relating to the present invention when taken along line IIa-IIa of Figure 1, and Figure 3(b) shows a sectional view of the same when taken along line IIb-IIb of Figure 1. The backbone of SiC-based composite material 17 is composed of yarn assembly 16, similarly to that of Si-SiC-based composite material 7. Yarn assembly 16 comprises laminating yarn alignments 11A, 11B, 11C, 11D, 11E, 11F in the vertical direction. In each yarn alignment, each yarn 13 is arranged two-dimensionally, and is almost parallel in the longitudinal direction. Each yarn in each of the vertically neighboring alignments crosses at right angles in the longitudinal direction. That is, each yarn 12A in each of yarn alignments 11A, 11C, 11E is parallel to each other in the longitudinal direction, and crosses at right angle to each yarn 12B in each of yarn alignments 11B, 11D, 11F in the longitudinal direction of yarn 12B. Each yarn is composed of fiber bundles 13 consisting of carbon fibers and a carbon component other than carbon fiber. The laminating of the yarn alignments results in constituting the yarn assembly 16 in the form of a three-dimensional grid. Each yarn is pressed during the molding step under pressure and formed to an oval-like figure.

In each of yarn alignments 11A, 11C, 11E, the spaces between the neighboring yarns are filled with matrix 18A, each matrix 18A extending parallel to yarn 12A along its surface. In each of yarn alignments 11B, 11D, 11F, the spaces between the neighboring yarns are filled with matrix 18B, each matrix 18B extending parallel to yarn 12B along its surface. As shown in Figures 3(a) and 3(b), each of matrices 18A and 18B is composed of silicon carbide phase 14 coating the surface of each yarn. A portion of the silicon carbide phase may protrude from the surface as small protrusion 19, or into a carbon fiber layer in the inside of the composite components. Within these small protrusions, there are formed pores (voids 15) having a median of the pore size of about 100 µm. Since these small protrusions 19 are formed along sites of matrices mainly made up of a carbon component or components other than the carbon fibers of the raw-material C/C composite, it is possible to adjust the density of small protrusion 19 in a unit area by selecting the distance between yarns and/or between yarn alignments, as appropriate. Silicon carbide phase 14 can be formed also between neighboring yarns 12A and 12B.

Each of matrices 18A and 18B extends narrowly and longitudinally along the surface of each yarn, preferably linearly, and crosses mutually at right angles. Matrix 18A within yarn alignments 11A, 11C, 11E and matrix 18B within yarn alignments 11B, 11D, 11F crossing at right angles to them are connected at the spaces between yarns 12A and 12B, respectively. Consequently, matrices 18A and 18B form a three-dimensional grid as a whole.

In composite materials relating to the present invention, for metal silicides to be used as material for impregnation are used ones having a melting point of at least 1400°C or higher. In particular, such metal silicides include titanium silicide, zirconium silicide, tantalum silicide, niobium silicide, chromium silicide, tungsten silicide, molybdenum silicide, and others. The reason of using metal silicides having a melting point of at least 1400°C or higher is that they are necessary for retaining a desired resistance to oxidation at 1000°C. In order to impregnate a metal silicide into a Si-SiC-based composite material or a SiC-based composite material that is a composite material produced by impregnating metallic silicon into a C/C composite or a C/C composite that is a carbonaceous composite material utilizing a C/C composite as the starting material (hereinafter referred to a C/C composite or the like), the manufacturing can be carried out by keeping both materials described above in an inert atmosphere for a desired period at a temperature in the vicinity of the melting point of the metal silicide to melt the metal silicide and impregnating the melted metal silicide into the above-mentioned composite material produced by impregnating a C/C composite or the like with metallic silicon.

In impregnating a melted metal silicide, both materials can be placed into a single container and heated to a pre-determined temperature to melt the metal silicide, followed by applying pressure within the container or maintaining the inside of the container under reduced pressure to impregnate the melted metal silicide into a C/C composite or the like. Conditions during impregnation, such as the temperature for melting, pressure to be applied or degree of reduced pressure, and holding period, can be set as appropriate, taking properties of the metal silicide to be used and others into account. The amount of impregnation can be varied, depending on various properties, such as the porosity of a C/C composite as the basal material, the fluidity of the melted metal silicide, and is usually 1 to 50%, as expressed in % by weight. At less than 1% by weight, effects of improving mechanical strength by metal silicide impregnation are not observed, and also resistance to oxidation is not increased. Impregnation at more than 50% may cause problems, for example, of increasing the manufacturing cost due to various limitations on manufacturing, and, at the same time, increase in the specific weight of composite materials, relative to that of C/C composites, with not being preferable. Accordingly, composite materials excellent in mechanical strength with a bending strength of 150 MPa or higher and a coefficient of kinetic friction of 0.5 µ or less can be obtained.

The following further describes specific embodiments of the present invention in detail by means of examples, which are not intended to limit the present invention.

### (Manufacturing Example)

### (1) Manufacturing of C/C Composites

Carbon fibers were put and set unidirectionally, and then impregnated with a phenolic resin. About ten thousands of long carbon fibers with a diameter of 10 µm were gathered to produce a fiber bundle (yarn). Yarn alignments (prepreg sheets) into which these yarns were formed were made and arranged as shown in Figure 3 to produce a prepreg sheet laminate, to which a carbon-based adhesive was applied to fasten the yarns mutually. The prepreg sheet laminate thus obtained was wound around a cylindrical carbon fiber having a diameter of 15 mm, onto which a carbon-based adhesive was applied to fasten the yarns mutually. After fastening, the cylindrical prepreg sheet laminates were put into an oven to cure the impregnated phenolic resin at 180°C and at normal pressure, followed by burning them at 2000°C under a nitrogen atmosphere to obtain C/C composites.

### (2) Impregnation of Metal Silicide Material

A series of C/C composites obtained in (1) as described above and having an outer diameter of 30 mm and an entire length of 200 cm was used as a basal material. A given amount of titanium silicide, zirconium silicide, tantalum silicide, niobium silicide, chromium silicide, tungsten silicide, or molybdenum silicide was kept at a pre-determined temperature to melt. Then each of thus melted silicides was separately impregnated into the individual above-mentioned basal material. After the individual above-mentioned basal material was impregnated completely with the predetermined melted silicides, the temperature of the inside of the furnace was reduced gradually to room temperature, at which the respective products were taken out from the furnace. Table 1 shows physical properties of thus produced products.

**Table 1**

| Metal Silicide | Ti-Si | Zr-Si | Ta-Si | Nb-Si | Cr-Si | W-Si | Mo-Si |
|---|---|---|---|---|---|---|---|
| Density (g/cc) | 2.1 | 2.2 | 2.3 | 2.3 | 2.2 | 2.4 | 2.2 |
| Bending Strength (Mpa) | 230 | 200 | 190 | 200 | 190 | 300 | 220 |
| Coefficient of Kinetic Fraction (µ) | 0.2 | 0.2 | 0.1 | 0.2 | 0.15 | 0.3 | 0.2 |

The bending strength was measured according to JIS R1601.

The coefficient of kinetic friction is a coefficient of friction between the same materials at a stabilized condition after sliding them at a dry state under a pressing pressure of 40 kg/cm² and at a rotating speed of 200 rpm for a few minutes.

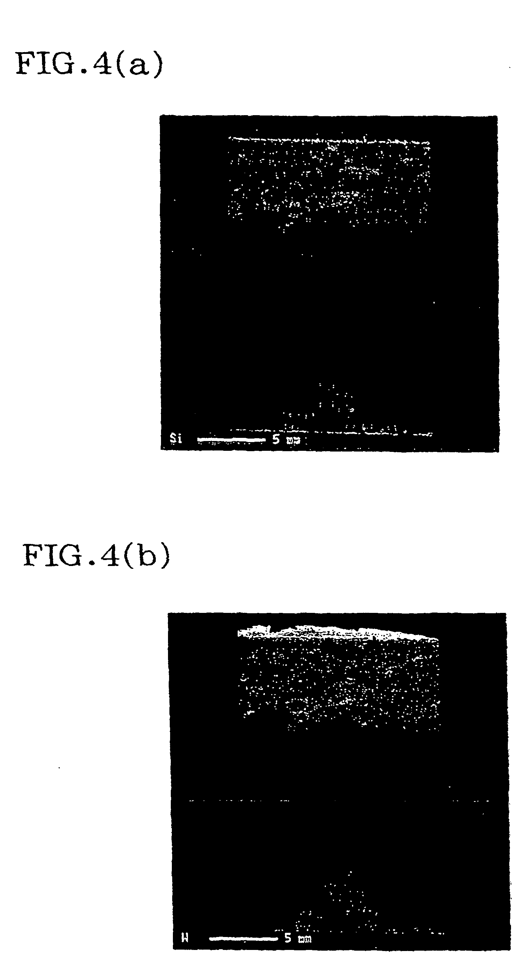

Examples of the sectional structure that is a feature of composite materials relating to the present invention are shown in Figure 4(a) and 4(b) as an EDS photograph of the sectional structure of the composite material obtained by impregnation of tungsten disilicide. White regions in the figures indicate high concentrations of the examined element. It can be found from Figures 4(a) and 4(b) that both silicon and tungsten are almost uniformly impregnated into the C/C composite precursor.

In addition, when each of composite materials prepared as described above according to the present invention was put into a furnace under an oxygen-poor condition having a dew point of -50°C and kept at 1000°C for 10 hours, changes in the weight was not observed for any sample. Similar results were also obtained when Si-SiC-based composite materials, SiC-based composite materials were used instead of the C/C composites.

As shown clearly from the above-mentioned physical properties and test results of resistance to oxidation, composite materials that can be produced by the methods according to the present invention are, of course, superior in resistance to oxidation, and are a new material having a good balance also in terms of mechanical strength and lightweight properties, and useful as constituent material of various components for aerospace applications and others requiring resistance to heat, corrosion, abrasion, and oxidation.

## Claims

1. A composite material impregnated with a metal silicide, which comprises a metal silicide and a C/C composite impregnated with at least the metal silicide.

2. The composite material according to claim 1, wherein said metal silicide has a melting point of at least 1400°C or higher.

3. The composite material according to claim 2, wherein said metal silicide is at least one selected from the group consisting of titanium silicide, zirconium silicide, tantalum silicide, niobium silicide, chromium silicide, tungsten silicide, and molybdenum silicide.

4. The composite material according to any one of claims 1 to 3, wherein said C/C composite is tubular, cylindrical, perforated-disc-shaped, or angular.

5. The composite material according to any one of claims 1 to 4, wherein said C/C composite is composed of carbon and carbon fibers, and has a porosity of 5% to 50% before impregnation of the metal silicide.

6. A process for producing a composite material comprising a metal silicide and a C/C composite impregnated with at least the metal silicide, wherein a basal material and a metal silicide is held in an inert atmosphere at a temperature in the vicinity of the melting point of the metal silicide for a desired period of time to impregnate a C/C composite as a basal material with the metal silicide, wherein the basal material is selected from the group consisting of C/C composites and carbonaceous composite materials in which a C/C composite is used as a starting material.

7. The process for producing a composite material according to claim 6, wherein said metal silicide has a melting point of at least 1400°C or higher.

8. The process for producing a composite material according to claim 6 or 7, wherein said metal silicide is at least one selected from the group consisting of titanium silicide, zirconium silicide, tantalum silicide, niobium silicide, chromium silicide, tungsten silicide, and molybdenum silicide.

9. The process for producing a composite material according to any one of claims 6 to 8, wherein said metal silicide is impregnated at an amount in the range of 1% to 50% by weight.

## Patentansprüche

1. Verbundmaterial, das mit einem Metallsilicid imprägniert ist und ein Metallsilicid und einen mit wenigstens dem Metallsilicid imprägnierten C/C-Verbund umfasst.

2. Verbundmaterial nach Anspruch 1, wobei das Metallsilicid einen Schmelzpunkt von wenigstens 1400°C oder höher aufweist.

3. Verbundmaterial nach Anspruch 2, wobei das Metallsilicid wenigstens eines ausgewählt aus der Gruppe bestehend aus Titansilicid, Zirkoniumsilicid, Tantalsilicid, Niobsilicid, Chromsilicid, Wolframsilicid und Molybdänsilicid ist.

4. Verbundmaterial nach einem der Ansprüche 1 bis 3, wobei der C/C-Verbund röhrenförmig, zylindrisch, von der Gestalt einer perforierten Scheibe oder winkelig ist.

5. Verbundmaterial nach einem der Ansprüche 1 bis 4, wobei der C/C-Verbund aus Kohlenstoff und Kohlenstofffasern besteht und vor dem Imprägnieren mit dem Metallsilicid eine Porosität von 5% bis 50% aufweist.

6. Verfahren zur Herstellung eines Verbundmaterials, das ein Metallsilicid und einen mit wenigstens dem Metallsilicid imprägnierten C/C-Verbund umfasst, wobei ein Grundmaterial und ein Metallsilicid für einen gewünschten Zeitraum in einer inerten Atmosphäre bei einer Temperatur in der Nähe des Schmelzpunktes des Metallsilicids gehalten werden, um einen C/C-Verbund als ein Grundmaterial mit dem Metallsilicid zu imprägnieren, wobei das Grundmaterial aus der Gruppe bestehend aus C/C-Verbünden und kohlenstoffhaltigen Verbundmaterialien, bei denen ein C/C-Verbund als ein Ausgangsmaterial verwendet wird, ausgewählt ist.

7. Verfahren zur Herstellung eines Verbundmaterials nach Anspruch 6, wobei das Metallsilicid einen Schmelzpunkt von wenigstens 1400°C oder höher aufweist.

8. Verfahren zur Herstellung eines Verbundmaterials nach Anspruch 6 oder 7, wobei das Metallsilicid wenigstens eines ausgewählt aus der Gruppe bestehend aus Titansilicid, Zirkoniumsilicid, Tantalsilicid, Niobsilicid, Chromsilicid, Wolframsilicid und Molybdänsilicid ist.

9. Verfahren zur Herstellung eines Verbundmaterials nach einem der Ansprüche 6 bis 8, wobei das Metallsilicid in einer Menge im Bereich von 1 bis 50 Gew. % imprägniert wird.

## Revendications

1. Matériau composite imprégné avec un siliciure de métal, comprenant un siliciure de métal et un composite C/C imprégné au moins avec le siliciure de métal.

2. Matériau composite selon la revendication 1, dans lequel ledit siliciure de métal a un point de fusion d'au moins 1400°C ou plus.

3. Matériau composite selon la revendication 2, dans lequel ledit siliciure de métal est l'un au moins choisi dans le groupe constitué par le siliciure de titane, le siliciure de zirconium, le siliciure de tantale, le siliciure de niobium, le siliciure de chrome, le siliciure de tungstène et le siliciure de molybdène.

4. Matériau composite selon l'une quelconque des revendications 1 à 3, dans lequel ledit composite C/ C est tubulaire, cylindrique, en forme de disque perforé, ou angulaire.

5. Matériau composite selon l'une quelconque des revendications 1 à 4, dans lequel ledit composite C/C se compose de carbone et de fibres de carbone et possède une porosité dans la plage de 5 % à 50 % avant l'imprégnation avec le siliciure de métal.

6. Procédé de production d'un matériau composite comprenant un siliciure de métal et un composite C/C imprégné au moins avec le siliciure de métal, dans lequel un matériau de base et un siliciure de métal sont maintenus dans une atmosphère inerte à une température voisine du point de fusion du siliciure de métal pendant une durée voulue afin d'imprégner avec le siliciure de métal un composite C/C servant de matériau de base, dans lequel le matériau de base est choisi dans le groupe constitué par les composites C/C et les matériaux composites carbonés où un composite C/C est utilisé comme matériau de départ.

7. Procédé de production d'un matériau composite selon la revendication 6, dans lequel ledit siliciure de métal a un point de fusion d'au moins 1400°C ou plus.

8. Procédé de production d'un matériau composite selon la revendication 6 ou la revendication 7, dans lequel ledit siliciure de métal est l'un au moins choisi dans le groupe constitué par le siliciure de titane, le siliciure de zirconium, le siliciure de tantale, le siliciure de niobium, le siliciure de chrome, le siliciure de tungstène et le siliciure de molybdène.

9. Procédé de production d'un matériau composite selon l'une quelconque des revendications 6 à 8, dans lequel ledit siliciure de métal est imprégné en une quantité dans la plage de 1 % à 50 % en poids.
